# EUROPÄISCHE PATENTSCHRIFT

(11) **EP 1 726 862 B1**
(45) Veröffentlichungstag und Bekanntmachung des Hinweises auf die Patenterteilung: **24.02.2010**
(21) Anmeldenummer: 05027825.8
(22) Anmeldetag: 20.12.2005
(51) Int. Cl.: F16L 21/06, F16L 37/00, F16L 37/084

(54) **Verbindungsanordnung mit koaxialen Endabschnitten zweier zu verbindender Fluidleitungen**
Coupling assembly with coaxial end sections of two fluid conduits to be connected
Ensemble de raccordement de sections terminales coaxiales de deux conduits de fluide à connecter

(30) Priorität: 27.05.2005 DE 102005024267
(43) Veröffentlichungstag der Anmeldung: 29.11.2006
(73) Patentinhaber: NORMA Germany GmbH, 63277 Maintal (DE)
(72) Erfinder: Kertesz, Janos, 65719 Hofheim (DE); Wachter, Gerhard, 63654 Büdingen (DE)
(74) Vertreter: Knoblauch, Andreas

(56) Entgegenhaltungen:
- DE-A1- 19 756 987
- DE-C1- 3 702 246
- DE-U- 7 003 244
- JP-A- 8 145 265
- JP-A- 2002 295 774
- US-A1- 2002 093 198

## Beschreibung

Die Erfindung bezieht sich auf eine Verbindungsanordnung mit koaxialen Endabschnitten zweier zu verbindender Fluidleitungen, die auf jedem Endabschnitt mit einer umlaufenden Halterippe versehen sind, mit einer Hülse, die einen axialen Schlitz, ein dem Schlitz gegenüberliegendes biegsames Gelenk und an ihrer Innenseite Halter zum Hintergreifen der Halterippen in Nuten hinter den Halterippen aufweist, wobei das Gelenk derart elastisch biegsam ist, daß es die dem Schlitz benachbarten Teile der Hülse radial zueinander hin belastet.

Bei einer Verbindungsanordnung dieser Art wird die Hülse unter Aufweitung ihres Schlitzes radial auf die Halterippen der Endabschnitte aufgesetzt. Die Endabschnitte lassen sich jedoch nicht axial, wie bei einer Steckkupplung, in die Hülse einstecken, weil sich dabei einer der Halter, die als Flansche an den Enden der Hülse ausgebildet sind, axial in der Nut hinter der einen Halterippe so weit verschiebt, bis der andere Halter an dieser Halterippe anliegt und kein freier Raum mehr zur Aufnahme der anderen Halterippe zwischen den Haltern verbleibt.

Bekannte Verbindungsanordnungen mit einer Hülse, z.B. die aus der DE 198 18 562 C1 oder DE 198 00 283 C1 bekannte Hülse, eine sogenannte "Profilschelle", dienen zum Verbinden von Rohren, die an ihren Enden mit Halterippen in Form von Flanschen versehen sind, deren den Enden abgekehrte Flanken konisch sind. Die Hülse besteht aus Stahlblech. Ihre Öffnungsränder sind zur Ausbildung der Halter um einen Winkel von weniger als 90° nach innen umgebogen, der dem Konuswinkel der Flansche an den Rohrenden entspricht. Der Schlitz der Hülse ist durch einen Rast- oder Gelenkverschluß überbrückbar. Das dem Schlitz gegenüberliegende Gelenk ist durch das Material der Hülse im Bereich einer Unterbrechung der umgebogenen konischen Ränder der Hülse nach Art eines "Filmgelenks" oder durch einen weiteren Gelenkverschluß gebildet. Beim Verbinden der Rohre wird die Hülse bei geöffnetem Verschluß (oder geöffneten Verschlüssen) um die Flansche der Rohre herumgelegt und der bzw. jeder Verschluß wieder geschlossen. Dabei legen sich die umgebogenen Ränder der Hülse an den konischen Flanken der Rohrflansche an, so daß die Rohrenden zusammengezogen werden. Das Stahlblech der Hülse ist zwar bei der Ausführung mit "Filmgelenk" (DE 198 18 562 C1) im Bereich des Gelenks biegsam, übt jedoch keine radiale Klemmkraft auf die Rohre aus. Die Klemmkraft beruht allein auf der Spannkraft des Verschlusses bzw. der Verschlüsse. Eine Verbindungsanordnung mit einer Hülse in Form einer Profilschelle ist daher nicht als einfach zu schließende Steckkupplung geeignet, bei der die Rohrenden lediglich axial in die Hülse eingesteckt zu werden brauchen und die Halter beim Einstecken hinter den Halterippen auf den Rohren einrasten, um die Verbindung herzustellen. Das Material der Hülse ist ausschließlich auf Metall beschränkt. Die Herstellung der Hülse mit dem Rastverschluß, der einstückig mit der Hülse ausgebildet ist, erfordert aufwendige Stanz- und Biegewerkzeuge. Die Herstellung der Hülse mit Gelenkverschluß erfordert zusätzlich dessen Ausbildung und Montage.

Bei einer Steckkupplung, wie sie aus der EP 1 378 701 A1 bekannt ist, besteht die Hülse aus elastischem Kunststoff in Form zweier ovaler Ringe, die durch zwei sich diametral gegenüberliegende Stege verbunden sind. Die Ringe sind innen mit Rastnasen versehen. Beim Einstecken der Rohrenden in die Ringe werden die Ringe elastisch durch Halterippen auf Endabschnitten der Rohre aufgeweitet, bis die Rastnasen der Ringe hinter den Halterippen einrasten. Im eingekuppelten Zustand verbleibt zwischen den Ringbereichen mit dem kleineren Krümmungsradius und den Rohren ein Spielraum, der ein radiales Zusammendrücken der Ringe zum Entkuppeln ermöglicht. Das Material dieser Hülse ist auf Kunststoff beschränkt. Zur Herstellung der Kupplung ist ein aufwendiges Formwerkzeug erforderlich. Wegen der weiten Zwischenräume zwischen den Stegen und dem Entkupplungsspielraum zwischen den Ringen und den Rohren besteht die Möglichkeit, daß die in die Hülse eingeführten Endabschnitte der Rohre verschmutzen. Dies kann ein wiederholtes Ein- und Auskuppeln erschweren.

Gemäß JP 2002295774 A sind zwei koaxiale Endabschnitte zweier Fluidleitungen mit einer Hülse miteinander verbunden. Am Endabschnitt ist eine umlaufende Halterippe angeordnet, am Endabschnitt eine umlaufende Nut. Die Hülse weist einen axialen Schlitz auf, der diametral gegenüber einem Gelenk angeordnet ist. An den Rändern des Schlitzes weist die Hülse zwei Angriffsflächen auf. Zum Befestigen der Hülse an den Endabschnitten ist es erforderlich, die Hülse durch das Einbringen radialer Kräfte auf die Angriffsflächen radial aufzuweiten. Ein Aufweiten durch Hinweggleiten der Halterippen wird durch die sich parallel gegenüberstehenden Flächen der Hülse sowie der Endabschnitte verhindert. Am Endabschnitt ist hinter der Halterippe keinerlei Nut zu sehen. Es ist auch nicht erkennbar, dass die im Endabschnitt ausgebildete Nut eine Weite aufweist, die der axialen Breite eines Halters der Hülse entspricht.

In JP 08145265 A ist nun eine Verbindungsanordnung mit einem Kupplungselement gezeigt, das an seinen Stirnseiten radial umlaufende Nuten aufweist, in die Endabschnitte zweier Fluidleitungen einsteckbar sind. Die Endabschnitte weisen jeweils eine umlaufende Nut auf, in die Halterungen des Kupplungselements eingreifen können. Um ein Lösen des Kupplungselements zu verhindern, ist es radial mit einem Federband umgeben, das eine radiale Spannkraft auf das Kupplungselement ausübt.

Aus US 2002/00931989 A1 ist eine Verbindungsanordnung bekannt, wobei eine Hülse mit einem ringförmigen Sockel auf einen Endabschnitt eines Wellrohres derart aufgesetzt ist, dass die axiale Erstreckung des Sockels einer axialen Weite zwischen zwei Wellen des Wellrohrs entspricht. Damit die Hülse zum Aufsetzen auf das Wellrohr ausreichend radial gedehnt werden kann, ist sie mit einem axialen Schlitz und einer Kraftangriffsfläche versehen. Die Hülse weist an ihrem axialen Ende, das vom Wellrohr abgewandt ist, eine Halterippe auf, die mit einer Halterippe eines Endabschnitts einer zweiten Fluidleitung rastend in Eingriff bringbar ist.

In DE 7 003 244 U ist ein einstellbares Stützelement zur Verstärkung von nachgiebigen Rohren offenbart, das als Hülse mit einem Schlitz ausgebildet ist. Allerdings dient das Stützelement nicht zum Verbinden zweier Fluidleitungen und weist auch keine Halter auf.

Der Erfindung liegt die Aufgabe zugrunde, eine Verbindungsanordnung der eingangs genannten Art anzugeben, die einfacher handhabbar ist und eine größere Freizügigkeit in der Materialwahl zuläßt.

Erfindungsgemäß ist diese Aufgabe dadurch gelöst, daß die Endabschnitte axial in die Hülse, unter elastischer Aufweitung des Schlitzes durch Hinweggleiten der Halterippen, deren Vorderflanken konisch sind, unter den Haltern, bis zur Einrastung hinter den Haltern einführbar sind, wobei die axiale Breite der Halter der Weite der Nuten entspricht.

Bei dieser Lösung kann die Verbindungsanordnung einfach wie eine Steckkupplung gehandhabt werden, um die Endabschnitte der Fluidleitungen zu verbinden. Ferner kann die Hülse an einem der Endabschnitte vormontiert sein. Die Hülse ist sowohl aus Metall als auch aus Kunststoff herstellbar.

Bei der Verwendung von Kunststoff zur Herstellung der Hülse können die Halter an der Innenseite der Hülse angeformte, sich in Umfangsrichtung der Hülse erstreckende Rastvorsprünge sein, deren Krümmungsradius kleiner als der der Halterippen auf den Endabschnitten der Fluidleitungen ist.

Um die Halterippen der Endabschnitte leicht unter den Haltern der Hülse hinweggleiten zu lassen, kann dafür gesorgt sein, daß die dem in Einführungsrichtung vorderen Ende der Endabschnitte zunächstliegende Flanke der Rastvorsprünge eine Auflaufschräge für die sich auf dem jeweiligen Endabschnitt befindende Halterippe aufweist.

Alternativ zu der Anformung der Halter an einer Kunststoff aufweisenden Hülse können die Halter so ausgebildet sein, daß sie Stäbe aus wenigstens einem der Materialien Metall und Kunststoff aufweisen, die mit ihren Enden, sich quer zur Axialrichtung der Hülse erstrekkend, in der Wand der Hülse befestigt sind. Dies ermöglicht es, die Hülse aus einem längeren Rohr, das Kunststoff oder Metall aufweist, zuzuschneiden.

Somit ist es möglich, daß die dem Schlitz benachbarten Teile der Hülse als Halbschalen ausgebildet sind, die durch das Gelenk verbunden sind.

Hierbei kann das Gelenk eines der Materialien Federstahl und Kunststoff aufweisen.

Insbesondere kann das Gelenk (wenigstens) eine in einem Kanal der Halbschalen angeordnete Blattfeder aufweisen. Eine Blattfeder läßt sich einfach und mit hoher Biegesteifigkeit und dementsprechend hoher Federkraft herstellen, um die erforderliche Klemmkraft auf die Endabschnitte der Fluidleitung auszuüben.

Vorzugsweise ist dafür gesorgt, daß die Blattfeder eine der Krümmung der Halbschalen angepaßte Krümmung hat, daß die Halbschalen thermoplastischen Kunststoff aufweisen und daß die Blattfeder von dem Kunststoff der Halbschalen umspritzt ist. Diese Formgebung hat den Vorteil, daß die Blattfeder sehr fest in den Halbschalen sitzt und gegen Korrosion geschützt ist.

Alternativ kann dafür gesorgt sein, daß die Blattfeder eine der Krümmung der Halbschalen angepaßte Krümmung hat, daß die Halbschalen thermoplastischen Kunststoff aufweisen und daß der Kanal in den Halbschalen vorgeformt und die Blattfeder in den Kanal eingesetzt ist. Hierbei können die Halbschalen und die Blattfeder zunächst unabhängig voneinander von verschiedenen Herstellern fertiggestellt werden, bevor sie miteinander verbunden werden.

Auch hierbei kann der Kanal ringsum, wie beim Umspritzen der Blattfeder, geschlossen sein.

Alternativ kann der Kanal als Nut ausgebildet sein, in der die Blattfeder befestigt ist. Beispielsweise kann die Blattfeder in der Nut festgeklebt oder formschlüssig befestigt sein, z.B. mittels Schrauben oder pilzartiger Noppen, die in Löcher der Blattfeder einrasten.

Vorzugsweise ist jedoch dafür gesorgt, daß die Wände der Nut hinterschnitten sind, so daß die Blattfeder in der Nut einrastbar ist. Diese Ausbildung der Nut und die Montage der Blattfeder in der Nut sind auf einfache Weise möglich.

Sodann kann das Kunststoff aufweisende Gelenk durch wenigstens eine der Verbindungsarten stoffschlüssig, formschlüssig und einstückig mit den Halbschalen verbunden sein.

Ferner ist es möglich, daß wenigstens ein Teil des Gelenks einen Teil wenigstens eines die Hülse umgebenden elastischen Ringes bildet, der wenigstens einen der Einführung eines Spreizwerkzeugs dienenden Abschnitt des Schlitzes frei läßt. Bei diesem oder jedem Ring kann es sich um ein federelastisches Band oder eine Schraubenfeder handeln, deren Enden miteinander verbunden sind. Jeder von dem oder den Ringen frei gelassene Schlitzabschnitt kann zur Einführung eines Spreizwerkzeugs zum Öffnen der Kupplung dienen.

Alternativ oder zusätzlich zu dem oder den frei gelassenen Abschnitt bzw. Abschnitten kann wenigstens einer der Ränder des Schlitzes wenigstens eine Aussparung zur Einführung eines Spreizwerkzeugs aufweisen.

Ferner kann die Hülse innen eine sich in Umfangsrichtung erstreckende Anschlagrippe für die Endabschnitte aufweisen. Diese Anschlagrippe ermöglicht eine axiale Zentrierung der Endabschnitte beim Einführen in die Hülse.

Ferner ist es vorteilhaft, wenn die Anschlagrippe aus einem elastomeren Dichtungsmaterial ausgebildet und an der Hülse umlaufend befestigt ist. Die Anschlagrippe erfüllt dann gleichzeitig die Funktion einer Dichtung zwischen den Rohren, so daß die Hülse nicht mit dem die Fluidleitungen durchströmenden, gegebenenfalls aggressiven Fluid in Berührung kommt.

Außerdem ist es möglich, daß hinter jeder Halterippe auf ihrer den freien Enden der eingekuppelten Endabschnitte abgekehrten Seite eine in einer der radialen Höhe der Halterippen entsprechenden Höhe radial vorstehende Nocke mit schrägen Flanken diametral in Bezug auf die Längsmittelachse der Hülse gegenüber dem Gelenk vorgesehen ist und die Halter im eingekuppelten Zustand beiderseits der bzw. jeder Nocke liegen.

Hierbei ist es ferner günstig, wenn diametral in Bezug auf die Längsmittelachse eine weitere Nocke gegenüber der zuerst erwähnten Nocke angeordnet ist.

Bei dieser Verbindungsanordnung können nach einer einfachen Drehung der Hülse mit der Hand um die Längsmittelachse der Hülse relativ zu den Endabschnitten der Fluidleitungen in dem Maße, daß die in Umfangsrichtung auseinanderliegenden Enden der Halter über die eine Flanke der einen bzw. beider Flanken jedes bzw. jeder Nocke, unter Aufweitung der Hülse, einschließlich des Ringes oder Gelenks, radial nach außen gleiten und die Halter mit ihren radial inneren Rändern auf dem bzw. jedem Nocken aufsitzen, beide Endabschnitte oder nur einer axial aus der Hülse herausgezogen werden. Dadurch können ein Entkupplungswerkzeug und die für den Werkzeugeingriff zum Entkuppeln vorgesehenen Aussparungen entfallen.

Alternativ ist es möglich, daß in dem Schlitz der Hülse ein Aufweitungselement, sich an Widerlagern der dem Schlitz benachbarten Teile der Hülse abstützend, beweglich gelagert ist und der Schlitz durch eine Bewegung des Aufweitungselements so weit aufweitbar ist, daß wenigstens einer der Endabschnitte aus der Hülse herausziehbar ist. Bei dieser Ausbildung ist zum Aufweiten der Hülse zwecks Entkupplung der Endabschnitte lediglich eine Bewegung des Aufweitungselements ohne Spreizwerkzeug erforderlich.

Ferner kann dafür gesorgt sein, daß das Aufweitungselement zwei durch einen den Schlitz durchsetzenden Steg verbundene Platten aufweist, von denen die eine Platte an der Außenseite und die andere Platte an der Innenseite der Hülse anliegt. Bei dieser Ausbildung des Aufweitungselements läßt es sich auf einfache Weise herstellen.

Ferner kann vorgesehen sein, daß das Aufweitungselement längs des Schlitzes verschiebbar ist und daß eine der beiden Platten keilförmig ist und mit seinen schräg zueinander verlaufenden Rändern an jeweils einem der Widerlager anliegt. Bei dieser Ausbildung kann die Hülse einfach durch manuelle Verschiebung des Aufweitungselements aufgeweitet werden.

Im einzelnen kann bei dieser Ausbildung vorgesehen sein, daß die Widerlager durch entsprechend dem Keilwinkel der schrägen Ränder der keilförmigen Platte schräg zueinander verlaufende Ränder von beiderseits des Schlitzes in der Hülsenwand ausgebildeten Vertiefungen gebildet sind.

Zusätzlich kann dafür gesorgt sein, daß der Verschiebeweg des Aufweitungselements durch Endanschläge begrenzt ist, die jeweils die maximale und minimale Aufweitung der Hülse durch das Aufweitungselement bestimmen. Dies hat den Vorteil, daß das Aufweitungselement gleichzeitig als Montageindikator dienen kann: Wenn es sich an dem die minimale Aufweitung der Hülse bestimmenden Endabschnitt befindet, kann dies als Anzeichen für eine richtig durchgeführte Verbindung gewertet werden.

Alternativ zu der Ausbildung des Aufweitungselements als Schieber kann der die Platten verbindende Steg als Exzenter ausgebildet und in dem Schlitz der Hülse drehbar gelagert sein, und die auf der Außenseite der Hülse liegende Platte kann mit einer mehrkantigen Vertiefung zur Aufnahme eines Drehwerkzeugs versehen sein. Bei dieser Ausbildung des Aufweitungselements kann die Hülse durch eine einfache Drehung des Aufweitungselements, z.B. bei Ausbildung der Vertiefung als Vierkantschlitz, mittels eines Schraubendrehers aufgeweitet werden.

Die Erfindung und ihre Weiterbildungen werden nachstehend anhand der beiliegenden Zeichnungen bevorzugter Ausführungsbeispiele näher beschrieben. Darin stellen dar:
- Fig. 1: eine perspektivische Ansicht eines ersten Ausführungsbeispiels einer Hülse der erfindungsgemäßen Verbindungsanordnung,
- Fig. 2: den einen und
- Fig. 3: den anderen Endabschnitt zweier durch die Hülse nach Fig. 1 zu verbindender Fluidleitungen in perspektivischer Darstellung,
- Fig. 4: eine Endansicht der Hülse nach Fig. 1,
- Fig. 5: den Axialschnitt V-V der Fig. 4 durch die Hülse nach Fig. 1,
- Fig. 6: einen Axialschnitt durch ein zweites Ausführungsbeispiel einer erfindungsgemäßen Verbindungsanordnung mit den in die Hülse eingesteckten Endabschnitten zweier durch die Verbindungsanordnung zu verbindender Fluidleitungen,
- Fig. 7: eine perspektivische Darstellung der Hülse nach Fig. 6 in vergrößertem Maßstab,
- Fig. 8: den Axialschnitt VIII-VIII der Hülse nach Fig. 7 in vergrößertem Maßstab,
- Fig. 9: den Querschnitt IX-IX der Fig. 8,
- Fig. 10: den Querschnitt X-X der Fig. 8,
- Fig. 11: den Querschnitt XI-XI der Fig. 8,
- Fig. 12: eine perspektivische Ansicht der einen Halbschale einer Hülse der Verbindungsanordnung nach den Fig. 6 bis 11,
- Fig. 13: einen Querschnitt durch eine Abwandlung der Hülse nach Fig. 1,
- Fig. 14: den Querschnitt XIV-XIV der Hülse nach Fig. 13,
- Fig. 15: eine weitere Abwandlung der Hülse nach Fig. 1 im Querschnitt,
- Fig. 16: eine weitere Abwandlung der Hülse nach Fig. 1 im Querschnitt,
- Fig. 17: eine weitere Abwandlung der Hülse nach Fig. 1 im Querschnitt,
- Fig. 18: eine Abwandlung der Hülse nach Fig. 15 im Querschnitt,
- Fig. 19: eine weitere Abwandlung der Hülse nach Fig. 1 im Querschnitt,
- Fig. 20: eine weitere Abwandlung der Hülse nach Fig. 1 im Querschnitt,
- Fig. 21: eine weitere Abwandlung der Hülse nach Fig. 1 im Querschnitt,
- Fig. 22: einen Querschnitt durch einen gegenüber dem links in Fig. 6 dargestellten ersten Endabschnitt etwas abgewandelten ersten Endabschnitt senkrecht zu dessen Längsrichtung unmittelbar hinter der links in Fig. 6 dargestellten Halterippe mit Blickrichtung zu dem in den zweiten Endabschnitt eingeführten Ende des ersten Endabschnitts,
- Fig. 23: eine perspektivische Ansicht einer weiteren Abwandlung der Hülse nach Fig. 1,
- Fig. 24: einen Querschnitt durch die Mitte der Hülse nach Fig. 23,
- Fig. 25: eine Draufsicht auf ein gegenüber dem nach den Fig. 23 und 24 abgewandeltes Aufweitungselement einer Hülse der erfindungsgemäßen Verbindungsanordnung,
- Fig. 26: eine Seitenansicht des Aufweitungselements nach Fig. 25 und
- Fig. 27: den Querschnitt XXVII-XXVII der Fig. 26.

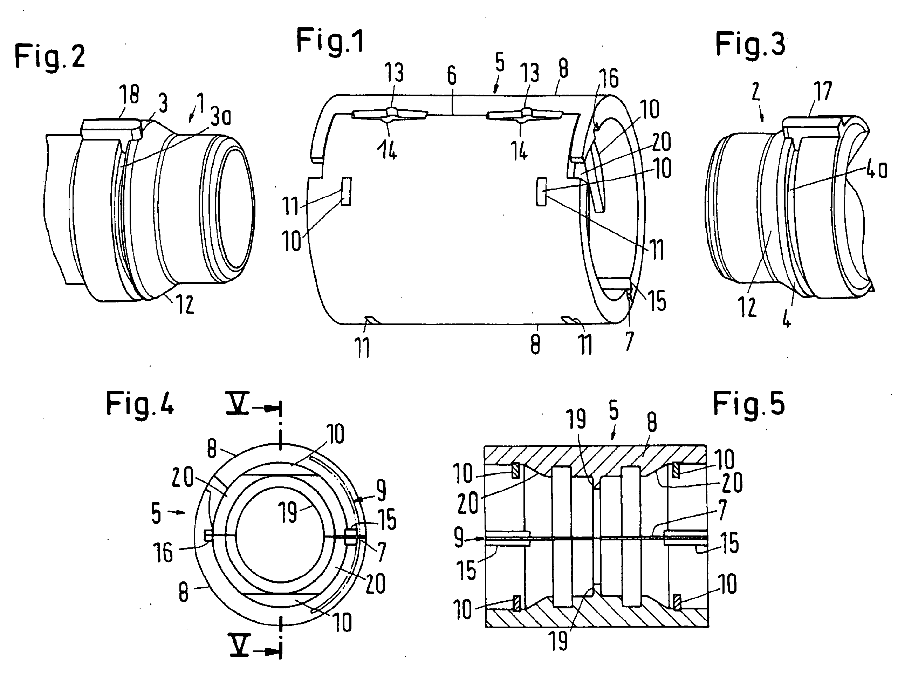

Die Kupplung nach den Fig. 1, 4 und 5 dient zum Verbinden der in den Fig. 2 und 3 dargestellten, mit jeweils einer umlaufenden Halterippe 3 bzw. 4 versehenen Endabschnitte 1 und 2 zweier Fluidleitungen, die jeweils an einem der Endabschnitte 1 und 2 befestigt oder einstükkig mit diesen ausgebildet sind. Wenigstens eine der Fluidleitungen kann separat oder als Teil einer Fluidleitungseinrichtung ausgebildet sein, wobei einer der Endabschnitte 1 und 2 auch als Anschlußstutzen einer solchen Fluidleitungseinrichtung ausgebildet sein kann.

Die Verbindungsanordnung weist eine Hülse 5 aus faserverstärktem oder unverstärktem thermoplastischem Kunststoff auf. Bei dem Kunststoff kann es sich um wenigstens eines der Materialien PA, PPS, POM, PP, PE, PET, PBT, PEN und PBN handeln. Alternativ kann die Hülse 5 einen Duroplasten aufweisen, z.B. Phenolharz.

Die Hülse 5 ist ringsum bis auf einen Schlitz 6 geschlossen, der sich über den größten Teil der Länge der Hülse 5 axial erstreckt. Dabei weist der eine Rand des Schlitzes einen etwa U-förmigen Rücksprung auf, in den der andere Rand des Schlitzes 6 eingreift. Der Schlitz 6 kann sich alternativ auch über die gesamte axiale Länge der Hülse 5 erstrecken.

Etwa diametral gegenüber dem Schlitz 6 ist die Hülse 5 mit einem Gelenk 7 versehen, das derart elastisch biegsam ist, daß es die dem Schlitz 6 benachbarten Teile 8, die hier als Halbschalen ausgebildet sind, radial zueinander hin belastet und dadurch die Endabschnitte 1 und 2, nach axialer Einführung der Endabschnitte 1 und 2 in die Hülse 5, fest einklemmt. Das Gelenk 7 wird durch einen dem Schlitz 6 gegenüberliegenden Teil einer Blattfeder 9 gebildet, die in dem Kunststoff der Teile 8 eingegossen bzw. von diesem umspritzt ist und sich axial über den größten Teil der Länge der Hülse 5 und in Umfangsrichtung der Hülse 5 über weniger als 90° in jedes Teil 8 der Hülse 5 erstreckt, sich aber auch über mehr als 90° hinaus in jedes Teil erstrecken kann. Das Material der Blattfeder 9 besteht aus Federstahl mit sehr hoher Biegesteifigkeit.

Die Hülse 5 ist ferner an ihrer Innenseite mit Haltern 10 in Form flacher Stäbe aus Stahl versehen, wobei sich in.der Nähe jedes axialen Endes der Hülse 5 zwei Stäbe 10 beiderseits des Schlitzes 6 und des Gelenks 7 gegenüberliegen, wie Fig. 5 zeigt. Die Halter 10 sind mit ihren Enden in durchgehenden Löchern 11 in den Teilen 8 befestigt, z.B. im Schnappsitz mittels Hinterschneidungen in den Löchern 11 und den Enden der Halter 10. Gleichzeitig greifen die Halter 10 in Nuten in der Innenseite der Hülse 5 ein (Fig. 5), die sich über weniger als 90° des Umfangs der Teile 8 erstrecken. Ferner können die Halter 10 auch aus Draht oder Kunststoff mit Widerhaken an den Enden geformt sein. Beim Einführen der Endabschnitte 1 und 2 in die Hülse 5, um die Fluidleitungen zu verbinden, können die Halterippen 3 und 4, deren Vorderflanken 12 konisch sind, unter den Haltern 10, unter elastischer Aufweitung des Schlitzes 6 und damit auch der Hülse 5, hinweggleiten, bis sie hinter den Haltern 10 und die Halter 10 in Nuten 3a, 4a (siehe Fig. 2, 3 und 6) hinter den Halterippen 3, 4 einrasten, wobei sich die Teile 8 fest an den Endabschnitten 1 und 2 anlegen, so daß die Verbindung axialen Zugkräften von wenigstens 500 Newton standhält. Die Weite der Nuten 3a, 4a entspricht der axialen Breite der Halter 10, so daß die Hülse 5 auch auf einem der Endabschnitte 1, 2 vormontiert werden kann. Statt die Halterippen 3 und 4 mit konischen Flanken 12 zu versehen, oder zusätzlich, können die Halter 10 an ihrem radial inneren Rand mit Auflaufschrägen versehen sein, die das Einkuppeln der Endabschnitte 1 und 2 erleichtern.

Zum Entkuppeln der Endabschnitte 1 und 2 kann die Hülse 5 mittels eines in den Schlitz 6 eingesetzten Spreizwerkzeugs, z.B. einer Spreizzange, gegen die Federkraft des Gelenks 7 so weit aufgeweitet werden, bis der Abstand der sich gegenüberliegenden Halter 10 zumindest bei dem einen Ende der Hülse 5 größer als der Außendurchmesser zumindest der hinter den bei dem einen Hülsenende liegenden Haltern 10 eingerasteten Halterippe 3 oder 4 ist. Um das Einsetzen des Spreizwerkzeugs in den Schlitz 6 zu erleichtern, sind in beiden den Schlitz 6 begrenzenden Rändern der Teile 8 sich gegenüberliegende Aussparungen 13 und 14 in der Nähe jeweils eines Endes der Hülse 5 ausgebildet. Die Aussparungen 13 und 14 in der Nähe jedes Hülsenendes vorzusehen, hat den Vorteil, daß gewünschtenfalls nur das eine oder das andere Hülsenende zum Herausziehen jeweils nur eines Endabschnitts 1 oder 2 aus der Hülse 5 aufgeweitet werden kann. Alternativ kann auch nur eine Aussparung 13 oder 14 in nur einem Rand des Schlitzes 6 ausgebildet sein.

Um die Hülse 5 an beiden Enden gleichzeitig aufzuweiten, kann nur ein Aussparungspaar 13, 14 oder nur eine Aussparung in dem einen Rand des Schlitzes 6 in der axialen Mitte der Hülse 5 ausgebildet sein.

Die Hülse 5 ist ferner an ihren Enden in ihrer Innenseite mit sich diametral gegenüberliegenden Nuten 15 und 16 versehen, die unterschiedlich breit sind und in die entsprechend breite, axiale Rippen 17 und 18 auf den Endabschnitten 1 und 2 passen. Dadurch ist es möglich, die Endabschnitte 1 und 2 nur in einer vorbestimmten Drehwinkellage relativ zueinander zu verbinden und sie gegen eine gegenseitige Verdrehung zu sichern. Die Rippen 17 und 18 bilden gleichzeitig einen visuellen Indikator für ein vollständiges Einkuppeln, wenn sie vollständig in die Nuten 15 und 16 eingeführt sind.

Die Teile 8 der Hülse 5 sind innen außerdem jeweils mit einer Rippe 19 in der axialen Mitte versehen, so daß die gesamte Hülse 5 mit einer umlaufenden Rippe 19 versehen ist, die als Anschlag für die freien Enden der Endabschnitte 1 und 2 zur axialen Zentrierung der Endabschnitte 1 und 2 dienen. Diese Funktion können aber auch die Nuten 15, 16 und die Rippen 17, 18 oder konische Flanken 20, an denen sich die Flanken 12 der Endabschnitte 1 und 2 hinter den Haltern 10 anlegen, übernehmen, so daß die Rippen 19 entfallen könnten. Die Rippen 19 könnten jedoch aus elastomerem Dichtungsmaterial bestehen und an der Innenseite der Hülse 5 bzw. an den Teilen 8, z.B. durch Anformen oder Ankleben, befestigt sein, so daß sie gleichzeitig die Endabschnitte 1, 2 gegeneinander abdichten. Dies hätte den Vorteil, daß die Hülse 5 praktisch nicht mit dem die Fluidleitungen bzw. ihre Endabschnitte 1, 2 durchströmenden, gegebenenfalls das Hülsenmaterial angreifenden Fluid in Berührung kommt.

Die Hülse 5 ist mittels einfacher Formwerkzeuge herstellbar, wobei ihre Teile 8 auch im gleichen Formwerkzeug herstellbar sind, wenn der Schlitz 6 axial geradlinig durchgehend ist. Beim Formen der Hülse 5 kann gleichzeitig die Blattfeder 9 eingegossen werden. Die Endabschnitte 1 und 2 lassen sich einfach dadurch verbinden, daß sie in die Hülse 5 eingesteckt werden. Auch das Entkuppeln ist auf einfache Weise durch Aufspreizung der Hülse 5 und Herausziehen wenigstens eines Endabschnitts 1 oder 2 aus der Hülse möglich. Die Ausbildung und Handhabung eines Verschlusses entfällt.

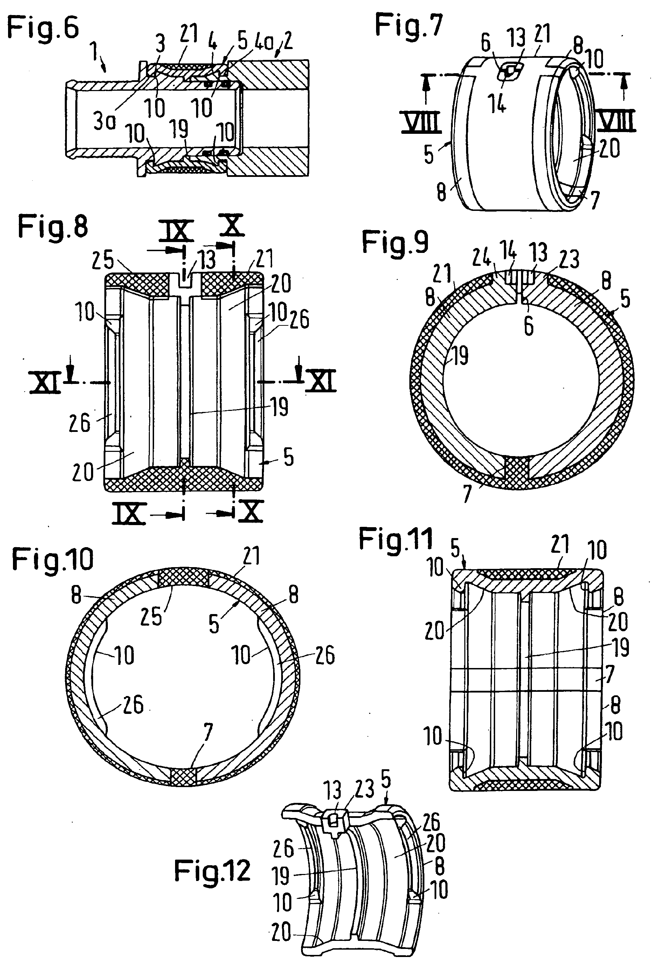

Das zweite Ausführungsbeispiel der Verbindungsanordnung nach den Fig. 6 bis 12 unterscheidet sich von dem ersten im wesentlichen in folgendem, wobei für einander weitgehend entsprechende Bauteile beider Ausführungsbeispiele gleiche Bezugszahlen verwendet werden. Daher werden nicht alle Bauteile der Verbindungsanordnung nach den Fig. 6 bis 12 erneut ausführlich beschrieben.

Die Hülse 5 ist von einem gummielastischen Ring 21 aus beispielsweise einem thermoplastischen Elastomer, z.B. PP, EPDM oder TEEE, oder einem vulkanisierten Kautschuk oder Silikonkautschuk, umgeben, wobei das Material des Ringes 21 um die Hülse 5 herumgespritzt ist.

Der Ring 21 hält die beiden halbschalenförmigen Teile 8 zusammen und bildet zugleich mit einer radial nach innen in die Hülse 5 ragenden Rippe auf der dem Schlitz 6 gegenüberliegenden Seite der Hülse 5 das Gelenk 7.

Die Aussparungen 13 und 14 befinden sich in der axialen Mitte der Hülse 5 in nach außen ragenden Vorsprüngen 23, 24 der Teile 8. Diese Vorsprünge 23, 24 sind von dem Ring 21 frei gelassen. Das Gelenk 7 und eine weitere Rippe 25 des Ringes 21 im Schlitz 6 bewirken darüber hinaus eine Abdichtung des Schlitzes 6 und des dem Schlitz 6 gegenüberliegenden Spaltes zwischen den sich gegenüberliegenden Rändern der Teile 8 gegen das Eindringen von Verunreinigungen und Feuchtigkeit in die Verbindungsanordnung.

Alternativ können anstelle des einen Ringes 21 zwei aus einem elastomeren oder gummielastischen Schlauch abgeschnittene Ringe jeweils von dem einen und dem anderen Ende der Hülse 5 her auf die Hülse 5 aufgeschoben sein. Eine weitere Alternative besteht darin, daß die Materialien der Teile 8, die wiederum aus dem gleichen Material bestehen können wie die Hülse 5 des ersten Ausführungsbeispiels, und/oder des Ringes 21 so gewählt oder modifiziert sind, daß sie beim Umspritzen eine Schmelz- oder Klebverbindung, z.B. nur eine Haftverbindung, eingehen. Die Teile 8 können aber auch aus Metall, vorzugsweise Stahl, bestehen.

Die Halter 10 sind an den Teilen 8 der Hülse 5 angeformt und mit einer Auflaufschräge 26 für die Halterippen 3 und 4 der Endabschnitte 1 und 2 versehen. Wenn die Hülse 5 aus Metall hergestellt ist, können die Halter 10 ebenfalls aus Metall oder Kunststoff bestehen und stoffschlüssig, z.B. durch Kleben, oder formschlüssig, z.B. mittels Schrauben oder im Schnappsitz, mit den Teilen 8 verbunden sein.

Die Endabschnitte 1 und 2 sind im eingekuppelten Zustand gemäß Fig. 6 ineinandergesteckt und gegeneinander durch Dichtringe abgedichtet, wie dargestellt. Alternativ können auch, wie bei dem ersten Ausführungsbeispiel, die Rippen 19, an denen sich die Endabschnitte 1, 2 wiederum, einerseits mit einer umlaufenden Abstufung des Endabschnitts 1 und andererseits mit dem freien Ende des Endabschnitts 2, anlegen, aus Dichtungsmaterial ausgebildet sein, so daß die Hülse 5 nicht mit dem Fluid in Berührung kommt.

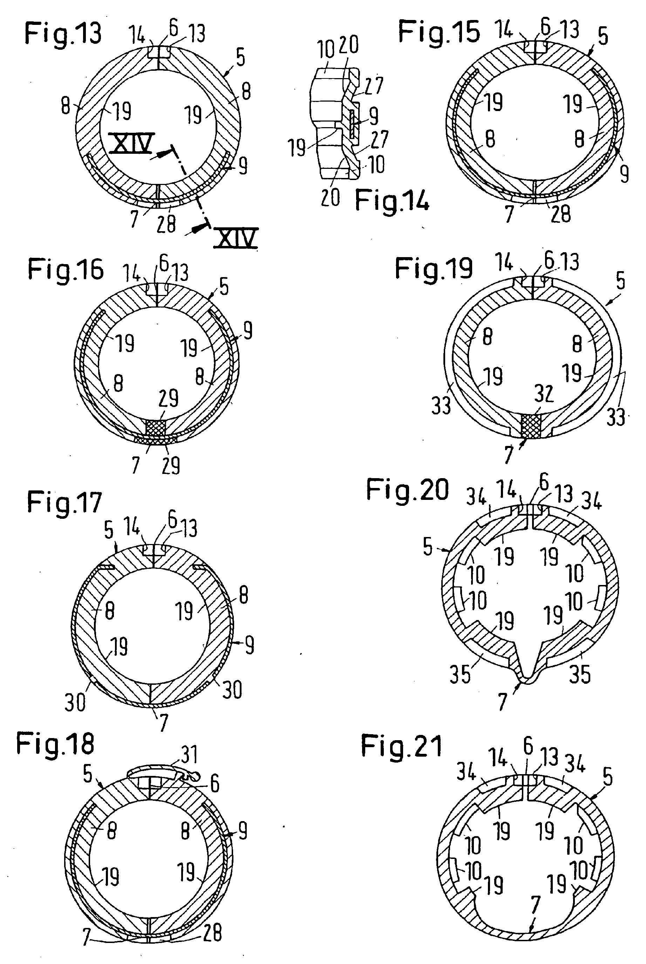

Fig. 13 stellt eine Abwandlung der Hülse 5 nach Fig. 1 im Querschnitt durch die axiale Mitte der Hülse 5 und Fig. 14 den Schnitt XIV-XIV der Fig. 13 dar. Hier liegen die Aussparungen 13 und 14 mithin in der axialen Mitte der Hülse 5, und die Breite der Blattfeder 9 erstreckt sich nur über weniger als die halbe Länge der Hülse 5. Die Halter 10 sind als relativ flache, umlaufende Rippen an den Enden der Hülse 5 aus dem Material der Hülse 5 geformt. Am äußeren Umfang sind umlaufende Nuten 27 zur Materialeinsparung ausgebildet. Das durch die Blattfeder 9 gebildete Gelenk 7 liegt außen in einem schmalen Bereich 28 frei, der sich axial nahezu über die gesamte axiale Länge der Hülse 5 und beiderseits des durch die Ränder der Teile 8 auf der dem Schlitz 6 gegenüberliegenden Hülsenseite begrenzten Spaltes erstreckt. Der Bereich 28 kann sich aber auch über die gesamte axiale Länge der Hülse 5 erstrecken.

Er ermöglicht ein weitgehend ungehindertes Aufbiegen der Blattfeder 9 und damit das Aufspreizen der Hülse 5 um das Gelenk 7 herum, insbesondere wenn sich der Bereich 28 über nahezu die gesamte axiale Länge der Hülse 5 erstreckt.

Fig. 15 stellt eine weitere Abwandlung der Hülse 5 nach Fig. 1 dar, die sich von der nach Fig. 13 und Fig. 14 nur dadurch unterscheidet, daß sich die Blattfeder 9 über mehr als 180° und weniger als 360° über den Umfang der Hülse 5 erstreckt.

Die Abwandlung nach Fig. 16 unterscheidet sich von der nach Fig. 15 nur dadurch, daß der Spalt zwischen den dem Schlitz 6 gegenüberliegenden Rändern der Teile 8 mit einer sich axial über die gesamte Länge der Hülse 5 und in dem bei der Abwandlung nach Fig. 15 frei liegenden Bereich 28 der Blattfeder 9 erstreckenden Leiste 29 aus einem elastomeren Kunststoff ausgefüllt ist, der stoffschlüssig mit diesen Rändern verbunden ist. Dadurch werden zum einen die in die Hülse 5 eingeführten Endabschnitte 1 und 2 vor Verunreinigungen und zum anderen die in diesem Fall aus Federstahl bestehende Blattfeder 9 vor Korrosion geschützt.

Die Abwandlung nach Fig. 17 unterscheidet sich von der nach Fig. 15 dadurch, daß die Blattfeder 9 in einem als Nut mit hinterschnittenen Wänden auf dem äußeren Umfang der Hülse 5 ausgebildeten Kanal eingerastet und mit ihren Enden, die nach innen umgebogen sind, in axialen Schlitzen in der Außenseite der Hülse 5 eingeführt ist. Zusätzlich sind im Boden der Nut ausgebildete Noppen 30 fest in Löcher der Blattfeder 9 eingepreßt oder pilzköpfig ausgebildet und mit den Pilzköpfen in den Löchern eingerastet.

Die Abwandlung nach Fig. 18 unterscheidet sich von der nach Fig. 15 nur dadurch, daß der Schlitz 6 durch einen Verschluß 31 in Form eines Rastverschlusses überbrückt ist, der mit seinem einen Ende biegsam an der Hülse 5 angeformt oder angeschweißt oder mit diesem durch ein formschlüssiges Gelenk verbunden ist und an seinem anderen Ende mit einem Haken versehen ist, der hinter einem an der Hülse 5 angeformten oder angeschweißten Haken einrastbar ist.

Die Abwandlung nach Fig. 19 unterscheidet sich von den vorhergehenden im wesentlichen dadurch, daß das Gelenk 7 nur durch eine elastomere, sich über die gesamte axiale Länge der Hülse 5 erstreckende Leiste 32 gebildet ist, die stoffschlüssig, z.B. durch eine Schmelzverbindung, mit den Rändern der Teile 8 in dem dem Schlitz 6 gegenüberliegenden Spalt zwischen den Rändern verbunden ist. Außerdem ist die Hülse 5 am Umfang mit Versteifungsrippen 33 versehen, von denen auf jedem Teil 8 wenigstens zwei in Axialrichtung der Hülse 5 parallel nebeneinander angeordnet sein können.

Die Hülse 5 nach Fig. 20 unterscheidet sich von den vorhergehenden im wesentlichen dadurch, daß das Gelenk 7 einstückig mit der Hülse 5 ausgebildet ist und radial über den Umfang der Hülse 5 nach außen vorsteht. Die Hülse 5 besteht wiederum aus wenigstens einem der im Zusammenhang mit dem ersten Ausführungsbeispiel erwähnten Kunststoffe, wobei ihr Material und die Dicke des Gelenks 7 so gewählt sind, daß das Gelenk 7 im wesentlichen die gleichen Eigenschaften wie das Gelenk 7 bei dem ersten Ausführungsbeispiel hat. Um Material einzusparen, ist die Hülse 5 außen mit Vertiefungen 34 und 35 versehen, deren in Axialrichtung der Hülse 5 hintereinanderliegenden Wände gleichzeitig als Versteifungsrippen wirken.

Fig. 21 stellt eine Abwandlung der Hülse 5 nach Fig. 20 dar, bei der das Gelenk 7 nicht über den Umfang der Hülse 5 vorsteht und sich über einen größeren Umfangswinkel der Hülse 5 erstreckt.

Eine weitere Abwandlung kann darin bestehen, daß bei allen Hülsen 5 ein Verschluß entsprechend dem Verschluß 31 gemäß Fig. 18 vorgesehen ist. Sodann können auch die Hülsen 5 gemäß den Fig. 19 bis 20 alternativ aus Metall bestehen.

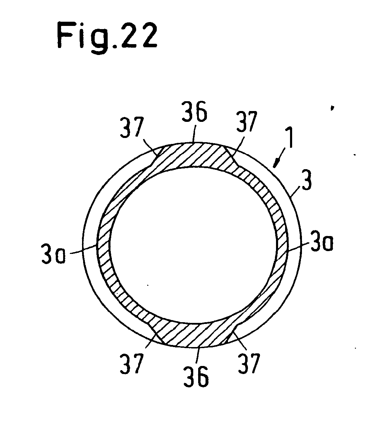

Fig. 22 stellt einen Querschnitt durch einen gegenüber dem in Fig. 6 dargestellten Endabschnitt etwas abgewandelten Endabschnitt 1 senkrecht zu dessen Längsrichtung unmittelbar hinter der Halterippe 3 in der Nut 3a mit Blickrichtung zu dem in den anderen Endabschnitt 2 eingeführten Ende des Endabschnitts 1 dar. Wie Fig. 22 zeigt, ist die nach Fig. 2 vorgesehen Rippe 18 weggelassen. Stattdessen ragen zwei sich diametral in Bezug auf die Längsmittelachse des Endabschnitts 1 gegenüberliegende Nocken 36 in der Nut 3a mit einer der Höhe der Halterippe 3 entsprechenden Höhe radial nach außen. Die Nocken 36 haben schräge Flanken 37 an ihren in Umfangsrichtung des Endabschnitts 1 auseinanderliegenden Enden. Auch der andere, in Fig. 6 dargestellte Endabschnitt 2 ist in gleicher Weise mit den Nocken 36 entsprechenden Nocken hinter seiner Halterippe 4 in der Nut 4a versehen, wobei auch bei diesem Endabschnitt 2 die in Fig. 3 dargestellte Rippe 17 weggelassen ist.

Im zusammengekuppelten Zustand der Endabschnitte 1 und 2 greifen die Halter 10 der Hülse 5 in die Ringnutabschnitte zwischen den Nocken 36 ein.

Nach einer einfachen Drehung der Hülse 5 mit der Hand um die Längsmittelachse der Hülse 5 relativ zu den Endabschnitten 1 und 2 in dem Maße, daß die in Umfangsrichtung auseinanderliegenden Enden der Halter 10 über die Flanken 37 der Nocken 36, unter Aufweitung der Hülse 5, einschließlich des Ringes 21 oder Gelenks 7, radial nach außen gleiten und die Halter 10 mit ihren radial inneren Rändern auf den Nocken 36 aufsitzen, können beide Endabschnitte 1 und 2 oder nur einer axial aus der Hülse 5 herausgezogen werden. Dadurch können ein Entkupplungswerkzeug und die für den Werkzeugeingriff zum Entkuppeln vorgesehenen Aussparungen 13, 14 entfallen.

Grundsätzlich ist es auch möglich, hinter jeder Halterippe 3, 4 nur eine Nocke 36 diametral in Bezug auf die Längsmittelachse der Endabschnitte 1, 2 etwa gegenüber dem Gelenk 7 bzw. dem das Gelenk 7 aufweisenden Spalt vorzusehen.

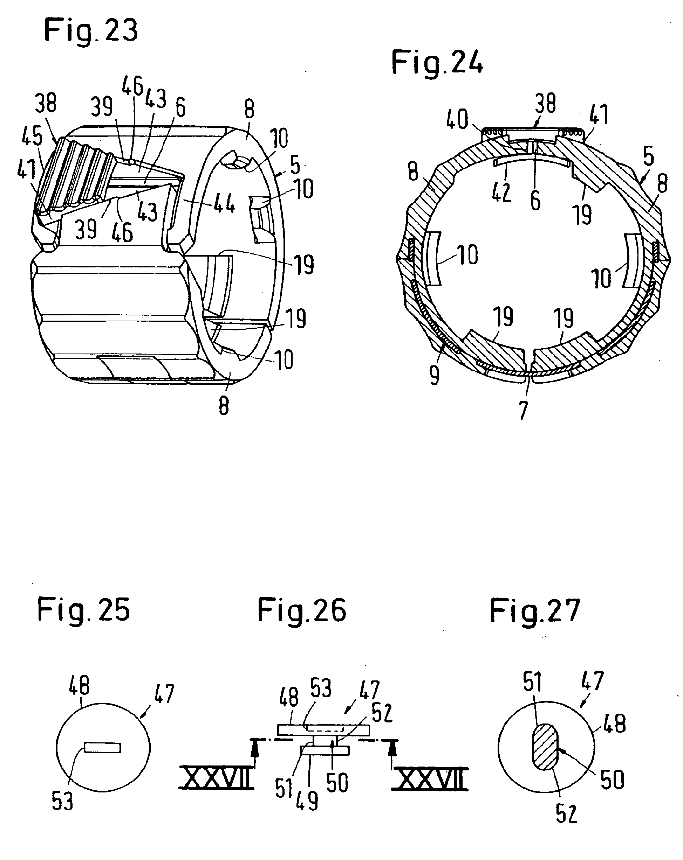

Bei der in den Fig. 23 und 24 dargestellten Abwandlung der Hülse 5 nach Fig. 1 ist in dem Schlitz 6 der Hülse 5 ein Aufweitungselement 38, sich an Widerlagern 39 der dem Schlitz 6 benachbarten Teile 8 der Hülse 5 abstützend, beweglich gelagert und der Schlitz 6 durch eine Bewegung des Aufweitungselements 38 so weit aufweitbar, daß wenigstens einer der Endabschnitte aus der Hülse 5 herausziehbar ist.

Das Aufweitungselement 38 weist zwei durch einen den Schlitz 6 durchsetzenden Steg 40 verbundene Platten 41, 42 auf, von denen die eine Platte 41 an der Außenseite und die andere Platte 42 an der Innenseite der Hülse 5 anliegt.

Das Aufweitungselement 38 ist längs des Schlitzes 6 verschiebbar. Eine der beiden Platten 41, 42, hier die Platte 41, ist abgestumpft keilförmig und liegt mit seinen schräg zueinander verlaufenden Rändern an jeweils einem der Widerlager 39 an.

Die Widerlager 39 sind durch entsprechend dem Keilwinkel der schrägen Ränder der keilförmigen Platte 41 schräg zueinander verlaufende Ränder von beiderseits des Schlitzes 6 in der Hülsenwand ausgebildeten Vertiefungen 43 gebildet.

Der Verschiebeweg des Aufweitungselements 38 ist durch Endanschläge 44, 45 begrenzt, die jeweils die maximale und minimale Aufweitung der Hülse 5 durch das Aufweitungselement 38 bestimmen. Das Aufweitungselement 38 ist in der Lage an dem die maximale Aufweitung der Hülse 5 bestimmenden Endanschlag 44 hinter Absätzen 46 der durch die Ränder der Vertiefungen 43 gebildeten Widerlager 39 verrastbar.

Durch manuelle Verschiebung des Aufweitungselements 38, dessen Oberseite gewellt oder geriffelt ist, um das manuelle Verschieben zu erleichtern, aus der die minimale Aufweitung bestimmenden, dargestellten Lage am Endanschlag 45 in die Lage am Endanschlag 44 wird die Hülse 5 so weit aufgeweitet, daß die Halter 10 aus den Nuten 3a, 4a hinter den Halterippen 3, 4 ausrasten und die Endabschnitte 1, 2 aus der Hülse 5 herausgezogen werden können, um die Verbindung der mit den Endabschnitten 1, 2 verbundenen Fluidleitungen zu lösen. In der Lage am Endanschlag 44 ist die Platte 41 hinter den Absätzen 46 eingerastet, so daß das Aufweitungselement 38 beim Entkuppeln nicht festgehalten werden muß. Die dargestellte Lage des Aufweitungselements 38 am Endanschlag 45 kann gleichzeitig als Anzeichen dafür gewertet werden, daß die in die Hülse 5 eingesteckten Endabschnitte und damit auch die Fluidleitungen richtig verbunden sind. Das Aufweitungselement 38 bildet daher gleichzeitig einen sogenannten Montageindikator.

Anstelle des in den Fig. 23 und 24 dargestellten Aufweitungselements 38 kann auch das in den Fig. 25 bis 27 dargestellte Aufweitungselement 47 verwendet werden, das in dem Schlitz 6 der Hülse 5 mit einem zwei parallele Platten 48 und 49 verbindenden Steg 50 drehbar gelagert ist. Die Platte 48 liegt auf der Außenseite der Hülse 5 und die Platte 49 an der Innenseite der Hülse 5 an. Sie können aber auch in flachen, jeweils an dem Schlitz 6 angrenzenden, halbkreisförmigen Vertiefungen in der Außenseite bzw. Innenseite der Hülse 5 gelagert sein. Der Steg 50 ist flach und an seinen Schmalseiten gewölbt, wobei jeweils die eine Hälfte des Steges 50 einen Exzenter 51 bzw. 52 bildet. Bei diesem Aufweitungselement 47 dienen die Ränder des Schlitzes 6 jeweils als Widerlager für den Steg 50, wobei der Steg 50 in der Schließlage der Hülse 5, in der die Endabschnitte 1, 2 eingekuppelt sind, mit seinen flachen Seiten an den Rändern des Schlitzes 6 anliegt. Die äußere Platte 48 ist mit einer mehrkantigen Vertiefung 53, hier einem vierkantigen Schlitz, zur Aufnahme eines Drehwerkzeugs, hier eines Schraubendrehers, versehen. Mittels des in die Vertiefung 53 eingeführten Drehwerkzeugs kann dann durch Drehung des Aufweitungselements der Schlitz 6 und damit die Hülse 5 bis zur Anlage der Exzenter 51, 52 an den Rändern des Schlitzes 6 aufgeweitet werden. In dieser aufgeweiteten Lage kann dann wenigstens einer der Endabschnitte 1, 2 aus der Hülse 5 herausgezogen werden. Grundsätzlich wäre auch nur einer der Exzenter 51, 52, bei hinreichend großem Abstand seiner Wölbung von der Drehachse des Stegs 50, zum Aufweiten der Hülse 5 erforderlich. Auch dieses Aufweitungselement 47 ist als Montageindikator geeignet, da der Kupplungszustand anhand der Drehwinkellage der Vertiefung 53 feststellbar ist.

## Patentansprüche

1. Verbindungsanordnung mit koaxialen Endabschnitten (1, 2) zweier zu verbindender Fluidleitungen, die auf jedem Endabschnitt (1, 2) mit einer umlaufenden Halterippe (3, 4) versehen sind, mit einer Hülse (5), die einen axialen Schlitz (6), ein dem Schlitz (6) gegenüberliegendes biegsames Gelenk (7) und an ihrer Innenseite Halter (10) zum Hintergreifen der Halterippen (3, 4) in Nuten (3a, 4a) hinter den Halterippen (3, 4) aufweist, wobei das Gelenk (7) derart elastisch biegsam ist, daß es die dem Schlitz (6) benachbarten Teile (8) der Hülse (5) radial zueinander hin belastet, **dadurch gekennzeichnet, daß** die Endabschnitte (1, 2) axial in die Hülse (5), unter elastischer Aufweitung des Schlitzes (6) durch Hinweggleiten der Halterippen (3, 4), deren Vorderflanken (12) konisch sind, unter den Haltern (10), bis zur Einrastung hinter den Haltern (10) einführbar sind, wobei die axiale Breite der Halter (10) der Weite der Nuten (3a, 4a) entspricht.

2. Verbindungsanordnung nach Anspruch 1, **dadurch gekennzeichnet, daß** die Halter (10) an der Innenseite der Hülse (5) angeformte, sich in Umfangsrichtung der Hülse (5) erstreckende Rastvorsprünge sind, deren Krümmungsradius kleiner als der der Halterippen (3, 4) auf den Endabschnitten (1, 2) der Fluidleitungen ist.

3. Verbindungsanordnung nach Anspruch 2, **dadurch gekennzeichnet, daß** die dem in Einführungsrichtung vorderen Ende der Endabschnitte (1, 2) zunächstliegende Flanke (26) der Rastvorsprünge eine Auflaufschräge für die sich auf dem jeweiligen Endabschnitt (1; 2) befindende Halterippe (3; 4) aufweist.

4. Verbindungsanordnung nach Anspruch 1, **dadurch gekennzeichnet, daß** die Halter (10) Stäbe aus wenigstens einem der Materialien Metall und Kunststoff aufweisen, die mit ihren Enden, sich quer zur Axialrichtung der Hülse (5) erstreckend, in der Wand der Hülse (5) befestigt sind.

5. Verbindungsanordnung nach einem der Ansprüche 1 bis 4, **dadurch gekennzeichnet, daß** die dem Schlitz (6) benachbarten Teile (8) der Hülse (5) als Halbschalen ausgebildet sind, die durch das Gelenk (7) verbunden sind.

6. Verbindungsanordnung nach Anspruch 5, **dadurch gekennzeichnet, daß** das Gelenk (7) eines der Materialien Federstahl und Kunststoff aufweist.

7. Verbindungsanordnung nach Anspruch 6, **dadurch gekennzeichnet, daß** das Gelenk (7) (wenigstens) eine in einem Kanal der Halbschalen (8) angeordnete Blattfeder (9) aufweist.

8. Verbindungsanordnung nach Anspruch 7, **dadurch gekennzeichnet, daß** die Blattfeder (9) eine der Krümmung der Halbschalen (8) angepaßte Krümmung hat, daß die Halbschalen (8) thermoplastischen Kunststoff aufweisen und daß die Blattfeder (7) von dem Kunststoff der Halbschalen (8) umspritzt ist.

9. Verbindungsanordnung nach Anspruch 7, **dadurch gekennzeichnet, daß** die Blattfeder (7) eine der Krümmung der Halbschalen (8) angepaßte Krümmung hat, daß die Halbschalen (8) thermoplastischen Kunststoff aufweisen und daß der Kanal in den Halbschalen (8) vorgeformt und die Blattfeder (9) in den Kanal eingesetzt ist.

10. Verbindungsanordnung nach Anspruch 9, **dadurch gekennzeichnet, daß** der Kanal ringsum geschlossen ist.

11. Verbindungsanordnung nach Anspruch 9, **dadurch gekennzeichnet, daß** der Kanal als Nut ausgebildet ist, in der die Blattfeder (9) befestigt ist.

12. Verbindungsanordnung nach Anspruch 11, **dadurch gekennzeichnet, daß** die Wände der Nut hinterschnitten sind, so daß die Blattfeder (9) in der Nut einrastbar ist.

13. Verbindungsanordnung nach Anspruch 7, **dadurch gekennzeichnet, daß** das Kunststoff aufweisende Gelenk (7) durch wenigstens eine der Verbindungsarten stoffschlüssig, formschlüssig und einstückig mit den Halbschalen (8) verbunden ist.

14. Verbindungsanordnung nach einem der Ansprüche 1 bis 6, **dadurch gekennzeichnet, daß** wenigstens ein Teil des Gelenks (7) einen Teil wenigstens eines die Hülse (5) umgebenden elastischen Ringes (21) bildet, der wenigstens einen der Einführung eines Spreizwerkzeugs dienenden Abschnitt des Schlitzes (6) frei läßt.

15. Verbindungsanordnung nach einem der Ansprüche 1 bis 14, **dadurch gekennzeichnet, daß** wenigstens einer der Ränder des Schlitzes (6) wenigstens eine Aussparung (13; 14) zur Einführung eines Spreizwerkzeugs aufweist.

16. Verbindungsanordnung nach einem der Ansprüche 1 bis 15, **dadurch gekennzeichnet, daß** die Hülse (5) innen eine sich in Umfangsrichtung erstreckende Anschlagrippe (19) für die Endabschnitte (1, 2) aufweist.

17. Verbindungsanordnung nach Anspruch 16, **dadurch gekennzeichnet, daß** die Anschlagrippe (19) aus einem elastomeren Dichtungsmaterial ausgebildet und an der Hülse (5) umlaufend befestigt ist.

18. Verbindungsanordnung nach einem der Ansprüche 1 bis 17, **dadurch gekennzeichnet, daß** hinter jeder Halterippe (3, 4) auf ihrer den freien Enden der eingekuppelten Endabschnitte (1, 2) abgekehrten Seite eine in einer der radialen Höhe der Halterippen (3, 4) entsprechenden Höhe radial vorstehende Nocke (36) mit schrägen Flanken (37) diametral in Bezug auf die Längsmittelachse der Hülse (5) gegenüber dem Gelenk (7) vorgesehen ist und die Halter (10) im eingekuppelten Zustand beiderseits der bzw. jeder Nocke (36) liegen.

19. Verbindungsanordnung nach Anspruch 18, **dadurch gekennzeichnet, daß** diametral in Bezug auf die Längsmittelachse eine weitere Nocke (36) gegenüber der zuerst erwähnten Nocke (36) angeordnet ist.

20. Verbindungsanordnung nach einem der Ansprüche 1 bis 17, **dadurch gekennzeichnet, daß** in dem Schlitz (6) der Hülse (5) ein Aufweitungselement (38; 47) sich an Widerlagern (39) der dem Schlitz (6) benachbarten Teile (8) der Hülse (5) abstützend, beweglich gelagert ist und der Schlitz (6) durch eine Bewegung des Aufweitungselements (38; 47) so weit aufweitbar ist, daß wenigstens einer der Endabschnitte (1, 2) aus der Hülse (5) herausziehbar ist.

21. Verbindungsanordnung nach Anspruch 20, **dadurch gekennzeichnet, daß** das Aufweitungselement (38; 47) zwei durch einen den Schlitz (6) durchsetzenden Steg (40; 50) verbundene Platten (41, 42; 48, 49) aufweist, von denen die eine Platte (41; 48) an der Außenseite und die andere Platte (42; 49) an der Innenseite der Hülse (5) anliegt.

22. Verbindungsanordnung nach Anspruch 21, **dadurch gekennzeichnet, daß** das Aufweitungselement (38) längs des Schlitzes (6) verschiebbar ist und daß eine der beiden Platten (41, 42) keilförmig ist und mit seinen schräg zueinander verlaufenden Rändern an jeweils einem der Widerlager (39) anliegt.

23. Verbindungsanordnung nach Anspruch 22, **dadurch gekennzeichnet, daß** die Widerlager (39) durch entsprechend dem Keilwinkel der schrägen Ränder der keilförmigen Platte (41) schräg zueinander verlaufende Ränder von beiderseits des Schlitzes (6) in der Hülsenwand ausgebildeten Vertiefungen (43) gebildet sind.

24. Verbindungsanordnung nach Anspruch 22 oder 23, **dadurch gekennzeichnet, daß** der Verschiebeweg des Aufweitungselements (38) durch Endanschläge (44, 45) begrenzt ist, die jeweils die maximale und minimale Aufweitung der Hülse (5) durch das Aufweitungselement (38) bestimmen.

25. Verbindungsanordnung nach Anspruch 24, **dadurch gekennzeichnet, daß** das Aufweitungselement (38) in der Lage an dem die maximale Aufweitung der Hülse (5) bestimmenden Endanschlag (44) verrastbar ist.

26. Verbindungsanordnung nach Anspruch 21, **dadurch gekennzeichnet, daß** der die Platten (48, 49) verbindende Steg (50) als Exzenter (51; 52) ausgebildet und in dem Schlitz (6) der Hülse (5) drehbar gelagert ist und daß die auf der Außenseite der Hülse (5) liegende Platte (48) mit einer mehrkantigen Vertiefung (53) zur Aufnahme eines Drehwerkzeugs versehen ist.

## Claims

1. Connecting arrangement with coaxial end portions (1, 2) of two fluid lines to be connected, which are provided on each end portion (1, 2) with a peripheral holding rib (3, 4), and with a sleeve (5) which has an axial slot (6), a flexible joint (7) lying opposite the slot (6) and, on its inside, holders (10) for the engagement of the holding ribs (3, 4) in grooves (3a, 4a) behind the holding ribs (3, 4), the joint (7) being elastically flexible in such a way that it loads radially towards one another the parts (8) of the sleeve (5) which are adjacent to the slot (6), **characterized in that** the end portions (1, 2) can be introduced axially into the sleeve (5), with the slot (6) being widened elastically by the holding ribs (3, 4), the front flanks (12) of which are conical, sliding beyond the said slot, beneath the holders (10), until the said end portions are latched behind the holders (10), the axial width of the holders (10) corresponding to the width of the grooves (3a, 4a).

2. Connecting arrangement according to Claim 1, **characterized in that** the holders. (10) are latching projections which are integrally formed on the inside of the sleeve (5) and extend in the circumferential direction of the sleeve (5) and the radius of curvature of which is smaller than that of the holding ribs (3, 4) on the end portions (1, 2) of the fluid lines.

3. Connecting arrangement according to Claim 2, **characterized in that** the flank (26) of the latching projections which lies next to the end of the end portions (1, 2) which is at the front in the introduction direction has a run-on slope for the holding rib (3; 4) located on the respective end portion (1; 2).

4. Connecting arrangement according to Claim 1, **characterized in that** the holders (10) have bars which consist of at least one of the materials, metal and plastic, and which are fastened with their ends in the wall of the sleeve (5) so as to extend transversely with respect to the axial direction of the sleeve (5).

5. Connecting arrangement according to one of Claims 1 to 4, **characterized in that** the parts (8) of the sleeve (5) which are adjacent to the slot (6) are designed as half-shells which are connected by means of the joint (7).

6. Connecting arrangement according to Claim 5, **characterized in that** the joint (7) of one of the materials has spring steel and plastic.

7. Connecting arrangement according to Claim 6, **characterized in that** the joint (7) has (at least) one leafspring (9) arranged in a channel of the half-shells (8).

8. Connecting arrangement according to Claim 7, **characterized in that** the leafspring (9), has a curvature adapted to the curvature of the half-shells (8), **in that** the half-shells (8) have thermoplastic, and **in that** the plastic of the half-shells (8) is injection-moulded around the leafspring (7).

9. Connecting arrangement according to Claim 7, **characterized in that** the leafspring (7) has a curvature adapted to the curvature of the half-shells (8), **in that** the half-shells (8) have thermoplastic, and **in that** the channel in the half-shells (8) is preformed and the leafspring (9) is inserted into the channel.

10. Connecting arrangement according to Claim 9, **characterized in that** the channel is closed all-round.

11. Connecting arrangement according to Claim 9, **characterized in that** the channel is designed as a groove in which the leafspring (9) is fastened.

12. Connecting arrangement according to Claim 11, **characterized in that** the walls of the groove are undercut so that the leafspring (9) can be latched in the grove.

13. Connecting arrangement according to Claim 7, **characterized in that** the joint (7) having plastic is connected to the half-shells (8) by means of at least one of the types of connection, materially integral, positive and one-piece.

14. Connecting arrangement according to one of Claims 1 to 6, **characterized in that** at least one part of the joint (7) forms part of at least one elastic ring (21) which surrounds the sleeve (5) and which leaves free at least one portion of the slot (6), the said portion serving for introducing an expanding tool.

15. Connecting arrangement according to one of Claims 1 to 14, **characterized in that** at least one of the margins of the slot (6) has at least one clearance (13; 14) for introducing an expanding tool.

16. Connecting arrangement according to one of Claims 1 to 15, **characterized in that** the sleeve (5) has internally a stop rib (19) for the end portions (1, 2) which extends in the circumferential direction.

17. Connecting arrangement according to Claim 16, **characterized in that** the stop rib (19) is produced from an elastomeric sealing material and is fastened peripherally to the sleeve (5).

18. Connecting arrangement according to one of Claims 1 to 17, **characterized in that**, behind each holding rib (3, 4), on its side facing away from the free ends of the coupled end portions (1, 2), a boss (36) which projects radially at a height corresponding to the radial height of the holding ribs (3, 4) and which has oblique flanks (37) is provided diametrically opposite the joint (7) with respect to the longitudinal mid-axis of the sleeve (5), and, in the coupled state, the holders (10) lie on both sides of the or each boss (36).

19. Connecting arrangement according to Claim 18, **characterized in that** a further boss (36) is arranged diametrically opposite the first-mentioned boss (36) with respect to the longitudinal mid-axis.

20. Connecting arrangement according to one of Claims 1 to 17, **characterized in that** a widening element (38; 47) is mounted movably in the slot (6) of the sleeve (5), being supported on abutments (39) of the parts (8) of the sleeve (5) which are adjacent to the slot (6), and the slot (6) can be widened as a result of a movement of the widening element (38; 47) to an extent such that at least one of the end portions (1, 2) can be drawn out of the sleeve (5).

21. Connecting arrangement according to Claim 20, **characterized in that** the widening element (38; 47) has two plates (41, 42; 48, 49) which are connected by means of a web (40; 50) passing through the slot (6) and of which one plate (41; 48) bears against the outside and the other plate (42; 49) against the inside of the sleeve (5).

22. Connecting arrangement according to Claim 21, **characterized in that** the widening element (38) is displaceable along the slot (6), and **in that** one of the two plates (41, 42) is wedge-shaped and bears with its obliquely tapering margins in each case against one of the abutments (39).

23. Connecting arrangement according to Claim 22, **characterized in that** the abutments (39) are formed by margins, obliquely tapering correspondingly to the wedge angle of the oblique margins of the wedge-shaped plate (41), of depressions (43) formed on both sides of the slot (6) in the sleeve wall.

24. Connecting arrangement according to Claim 22 or 23, **characterized in that** the displacement travel of the widening element (38) is limited by limit stops (44, 45) which in each case determine the maximum and minimum widening of the sleeve (5) by the widening element (38).

25. Connecting arrangement according to Claim 24, **characterized in that** the widening element (38) can be latched in the position at the limit stop (44) determining the maximum widening of the sleeve (5).

26. Connecting arrangement according to Claim 21, **characterized in that** the web (50) connecting the plates (48, 49) is designed as an eccentric (51; 52) and is mounted rotatably in the slot (6) of the sleeve (5), and **in that** the plate (48) lying on the outside of the sleeve (5) is provided with a polygonal depression (53) for the reception of a turning tool.

## Revendications

1. Ensemble de raccordement comprenant des sections terminales coaxiales (1, 2) de deux conduits de fluide à raccorder, qui sont dotés, sur chaque section terminale (1, 2), d'une nervure de maintien périphérique (3, 4), comprenant une douille (5), qui présente une fente axiale (6), une articulation (7) flexible à l'opposé de la fente (6) et des supports (10) sur sa face intérieure, pour engager les nervures de maintien (3, 4) par l'arrière dans des rainures (3a, 4a) derrière les nervures de maintien (3, 4), l'articulation (7) étant flexible avec effet élastique de telle façon qu'elle charge les parties (8) de la douille (5) voisines de la fente (6) radialement l'une vers l'autre, **caractérisé en ce que** les sections terminales (1, 2) peuvent être introduites axialement dans la douille (5) avec élargissement élastique de la fente (6), par coulissement des nervures de maintien (3, 4), dont les flancs antérieurs (12) sont coniques, par-dessous les supports (10), jusqu'à enclenchement derrière les supports (10), et la largeur axiale des supports (10) correspond à la largeur des rainures (3a, 4a).

2. Ensemble de raccordement selon la revendication 1, **caractérisé en ce que** les supports (10) sont des saillies d'enclenchement conformées sur la face intérieure de la douille (5) et s'étendant en direction périphérique de la douille (5), dont le rayon de courbure est inférieur à celui des nervures de maintien (3, 4) sur les sections terminales (1, 2) des conduits de fluide.

3. Ensemble de raccordement selon la revendication 2, **caractérisé en ce que** le flanc (26) des saillies d'enclenchement qui se trouve au plus proche de l'extrémité, antérieure en direction d'introduction, des sections terminales (1, 2) comporte une pente de montée pour la nervure de maintien (3 ; 4) qui se trouve sur la section terminale respective (1 ; 2).

4. Ensemble de raccordement selon la revendication 1, **caractérisé en ce que** les supports (10) comprennent des barreaux en au moins un des matériaux que sont le métal et la matière plastique, qui sont fixés dans la paroi de la douille (5) avec leurs extrémités, en s'étendant perpendiculairement à la direction axiale de la douille (5).

5. Ensemble de raccordement selon l'une des revendications 1 à 4, **caractérisé en ce que** les parties (8) de la douille (5) qui sont voisines de la fente (6) sont réalisées comme des demi-coques qui sont reliées par l'articulation (7).

6. Ensemble de raccordement selon la revendication 5, **caractérisé en ce que** l'articulation (7) comprend un des matériaux que sont l'acier à ressort et la matière plastique.

7. Ensemble de raccordement selon la revendication 6, **caractérisé en ce que** l'articulation (7) comprend (au moins) un ressort à lame (9) agencé dans un canal des demi-coques (8).

8. Ensemble de raccordement selon la revendication 7, **caractérisé en ce que** le ressort à lame (9) possède une courbure adaptée à la courbure des demi-coques (8), **en ce que** les demi-coques (8) comportent une matière thermoplastique, et **en ce que** le ressort à lame (7) est enrobé par la matière plastique des demi-coques (8).

9. Ensemble de raccordement selon la revendication 7, **caractérisé en ce que** le ressort à lame (7) possède une courbure adaptée à la courbure des demi-coques (8), **en ce que** les demi-coques (8) comportent une matière thermoplastique, et **en ce que** le canal est préformé dans les demi-coques (8) et le ressort à lame (9) est mis en place dans le canal.

10. Ensemble de raccordement selon la revendication 9, **caractérisé en ce que** le canal est fermé sur tout son pourtour.

11. Ensemble de raccordement selon la revendication 9, **caractérisé en ce que** le canal est réalisé sous forme de rainure dans laquelle est fixé le ressort à lame (9).

12. Ensemble de raccordement selon la revendication 11, **caractérisé en ce que** les parois de la rainure sont en contre-dépouille, de sorte que le ressort à lame (9) est capable de s'enclencher dans la rainure.

13. Ensemble de raccordement selon la revendication 7, **caractérisé en ce que** l'articulation (7) comprenant la matière plastique est reliée avec les demi-coques (8) par l'un au moins des modes de raccordement que sont la coopération de matières, la coopération de formes et la réalisation d'une seule pièce.

14. Ensemble de raccordement selon l'une des revendications 1 à 6, **caractérisé en ce qu'**au moins une partie de l'articulation (7) forme une partie d'au moins un anneau élastique (21) qui entoure la douille (5) et qui dégage au moins un tronçon de la fente (6) servant à l'introduction d'un outil d'écartement.

15. Ensemble de raccordement selon l'une des revendications 1 à 14, **caractérisé en ce que** l'une des bordures de la fente (6) au moins comprend au moins un évidement (13 ; 14) pour l'introduction d'un outil d'écartement.

16. Ensemble de raccordement selon l'une des revendications 1 à 15, **caractérisé en ce que** la douille (5) comprend à l'intérieur une nervure de butée (19) pour les sections terminales (1, 2), qui s'étend en direction périphérique.

17. Ensemble de raccordement selon la revendication 16, **caractérisé en ce que** la nervure de butée (19) est réalisée en un matériau d'étanchéité élastomère et est fixée en périphérie sur la douille (5).

18. Ensemble de raccordement selon l'une des revendications 1 à 17, **caractérisé en ce que**, derrière chaque nervure de maintien (3, 4) et sur son côté détourné des extrémités libres des sections terminales (1, 2) accouplées, il est prévu une came (36) qui dépasse radialement à une hauteur qui correspond à la hauteur radiale des nervures de maintien (3, 4) avec des flancs obliques (37), diamétralement à l'opposé de l'articulation (7) par référence à l'axe médian longitudinal de la douille (5), et les supports (10) se trouvent, à l'état accouplé, des deux côtés de la came ou de chaque came (36).

19. Ensemble de raccordement selon la revendication 18, **caractérisé en ce qu'**une autre came (36) est agencée à l'opposé de la première came précitée (36), diamétralement par référence à l'axe médian longitudinal.

20. Ensemble de raccordement selon l'une des revendications 1 à 17, **caractérisé en ce qu'**il est prévu un élément d'élargissement (38 ; 47), agencé mobile dans la fente (6) de la douille (5), qui s'appuie sur des contrebutées (39) des parties (8) de la douille (5) voisines de la fente (6), et la fente (6) peut être élargie par un mouvement de l'élément d'élargissement (38 ; 47) aussi largement que l'une au moins des sections terminales (1, 2) peut être extraite hors de la douille (5).

21. Ensemble de raccordement selon la revendication 20, **caractérisé en ce que** l'élément d'élargissement (38 ; 47) comprend deux plaques (41, 42 ; 48, 49) reliées par une barrette (40 ; 50) qui traverse la fente (6), parmi lesquelles l'une des plaques (41 ; 48) est appliquée contre la face extérieure de la douille (5) et l'autre plaque (42 ; 49) est appliquée contre la face intérieure de la douille (5).

22. Ensemble de raccordement selon la revendication 21, **caractérisé en ce que** l'élément d'élargissement (38) est capable de se déplacer le long de la fente (6), et **en ce que** l'une des deux plaques (41, 42) est en forme de coin et s'applique, par ses bordures convergeant en oblique l'une vers l'autre, sur l'une des contrebutées respectives (38).

23. Ensemble de raccordement selon la revendication 22, **caractérisé en ce que** les contrebutées (39) sont formées par des bordures, convergeant en oblique l'une vers l'autre en correspondance de l'angle de conicité des bordures obliques de la plaque (41) en forme de coin, de renfoncements (43) ménagés dans la paroi de la douille des deux côtés de la fente (6).

24. Ensemble de raccordement selon la revendication 22 ou 23, **caractérisé en ce que** le trajet de déplacement de l'élément d'élargissement (38) est limité par des butées terminales (44, 45) qui déterminent chacune l'élargissement maximal et l'élargissement minimal de la douille (5) par l'élément d'élargissement (38).

25. Ensemble de raccordement selon la revendication 24, **caractérisé en ce que** l'élément d'élargissement (38) est susceptible d'être enclenché dans la situation contre la butée terminale (44) qui détermine l'élargissement maximum de la douille (5).

26. Ensemble de raccordement selon la revendication 21, **caractérisé en ce que** la barrette (50) qui relie les plaques (49, 48) est réalisée sous forme d'excentrique (51 ; 52) et est montée en rotation dans la fente (6) de la douille (5), et **en ce que** la plaque (48) située sur la face extérieure de la douille (5) est pourvue d'un renfoncement polygonal (53) pour la réception d'un outil rotatif.
